Europäisches Patentamt

European Patent Office

Office européen des brevets

(19)

(11) Numéro de publication : **0 399 122 B1**

(12) **FASCICULE DE BREVET EUROPEEN**

(45) Date de publication du fascicule du brevet :
**11.11.92 Bulletin 92/46**

(51) Int. CI.$^5$ : **G01V 1/147,** G10K 1/08

(21) Numéro de dépôt : **89401395.2**

(22) Date de dépôt : **22.05.89**

(54) **Dispositif anti-rebond pour éviter les chocs multiples d'une masse mobile après un premier choc contre un autre élément.**

(43) Date de publication de la demande :
**28.11.90 Bulletin 90/48**

(45) Mention de la délivrance du brevet :
**11.11.92 Bulletin 92/46**

(84) Etats contractants désignés :
**DE GB IT NL**

(56) Documents cités :
**DE-C- 506 259
FR-A- 548 313
FR-A- 1 337 935
FR-A- 2 590 994
GB-A- 2 101 743**

(73) Titulaire : **INSTITUT FRANCAIS DU PETROLE
4, Avenue de Bois Préau
F-92502 Rueil-Malmaison (FR)**

(72) Inventeur : **Meynier, Patrick
23 bis, rue des Garennes
F-78400 Chatou (FR)**

(74) Mandataire : **Kermarrec, Michelle et al
Institut Français du Pétrole Département
Brevets 4, avenue de Bois-Préau
F-92502 Rueil-Malmaison (FR)**

EP 0 399 122 B1

## Description

La présente invention a pour objet un dispositif anti-rebond pour éviter les chocs multiples d'une masse mobile après un premier choc ou impact contre un autre élément.

Le dispositif selon l'invention peut être utilisé pour des applications très diverses. Il trouve son application notamment dans le domaine des sources d'ondes sismiques ou acoustiques où une masse en mouvement vient heurter avec force un élément-cible contre lequel elle est précipitée par action de la pesanteur et/ou de moyens moteurs. Une source à percussion pour la prospection sismique terrestre et comportant une masse chutant le long d'un élément de guidage vers un élément-cible ancré contre la surface du sol, est décrite dans le brevet français n° 2 398 316. Une autre, adaptée plus particulièrement à un usage dans un forage, est décrite dans le brevet français n° 2 552 553. L'utilisation de moyens moteurs pour lancer une masse contre un élément-cible ancré dans un puits, est décrite dans le brevet français n° 2 558 601.

Lorsque la masse est laissée libre, elle rebondit généralement après son impact contre l'élément-cible associé et revient ensuite le frapper une ou plusieurs fois avec des forces décroissantes. La "signature" de la source sismique c'est-à-dire la forme des impulsions qu'elle émet, comporte donc dans ce cas plusieurs impulsions secondaires d'amplitudes décroissantes à la suite de l'impulsion principale et ceci a pour effet de perturber les enregistrements sismiques correspondant aux réflexions sismiques sur les discontinuités du sous-sol de l'ébranlement émis.

Dans les brevets français FR 1 337 935 et 1 337 935 sont décrits des générateurs sonores comportant des organes vibrant sous l'effet de chocs d'éléments percuteurs lancés vers eux, et des moyens pour exercer des forces de recul qui empêchent lesdits éléments percuteurs de revenir au contact après le premier choc.

Par le brevet français n° 2 509 052, on connait un dispositif pour éviter les chocs multiples sur un élément-cible, couplé avec la surface du sol, d'une masse guidée dans sa chute par des moyens de guidage, ces chocs multiples étant dûs aux rebonds de la masse après son premier impact. Ce dispositif comporte essentiellement un élément déformable assujetti aux moyens de guidage et des moyens de commande adaptés à appliquer l'élément déformable contre la paroi latérale de la masse après son premier rebond et l'immobiliser avant qu'elle ne retombe de nouveau. Les moyens de commande comportent par exemple un organe mobile déplacé radialement par action d'un vérin hydraulique et un détecteur d'impact délivrant un signal de commande par le vérin.

Ce dispositif bloque très efficacement toute retombée de la masse mais, du fait de sa position transversale perpendiculaire à l'axe longitudinal des moyens de guidage, son encombrement ne serait pas compatible avec les dimensions réduites des forages où les sources sismiques de puits sont généralement descendues.

Le dispositif selon l'invention permet d'éviter les chocs multiples d'une masse en mouvement après son premier choc contre un objet ou un élément, dans tous les cas où l'espace latéral autour de la direction de chute est restreint. Contrairement aux dispositifs antérieurs précédemment mentionnés qui empêchent la masse en mouvement de revenir en contact avec l'élément heuté en la bloquant après son premier rebond, le dispositif selon l'invention a pour objet d'empêcher les rebonds.

Il est caractérisé en ce qu'il comporte des moyens magnétiques pour exercer sur la masse une force attractive intermittent qui a pour effet de la plaquer contre l'objet et d'empêcher son recul sous l'effet du choc.

Le dispositif selon l'invention permet notamment d'éviter les rebonds d'une masse en mouvement après un premier choc contre un élément-cible en contact avec des formations géologiques de manière à constituer une source sismique avec une "signature" exempte d'impulsions secondaires.

Les moyens magnétiques comportent par exemple au moins un aimant permanent, au moins un électro-aimant, des moyens d'alimentation en courant électrique et des moyens de commande pour créer une force magnétique du même sens que la force magnétique de l'aimant permanent ou de sens contraire à cette force de manière à annuler sensiblement la force d'attraction et faciliter l'écartement de la masse.

D'autres caractéristiques et avantages du dispositif selon l'invention apparaîtront à la lecture de la description de modes de réalisation donnés à titre d'exemple non limitatifs, en se référant aux dessins annexés où :

- la figure 1 montre une vue en coupe du dispositif associé à un élément-cible quelconque;
- la figure 2 montre une vue de dessus du même dispositif comportant des aimants permanents disposés en couronne; et
- la figure 3 montre un exemple d'application du dispositif où la force magnétique est utilisée pour éviter les rebonds d'une masse après un choc contre un élément-cible ancré dans un puits.

Le dispositif selon l'invention est associé à un élément-cible 1 adapté à recevoir les impacts d'une masse en mouvement 2. Il comporte des moyens magnétiques associés à l'élément-cible pour exercer sur la masse une force d'attraction intermittente. L'élément-cible comporte un évidement 3 pour placer au moins un ensemble magnétique constitué d'un aimant permanent 4 et d'un électro-aimant 5 connecté par un câble d'alimentation 6 à une source de courant continu 7, par l'intermédiaire d'un commutateur 8 à deux positions permettant de modifier à volonté le sens du courant de magnétisation. Les caractéristiques de l'aimant permanent et de l'électro-aimant de chaque ensemble magnétique et leur disposition relative sont choisies pour que, dans une première position du commutateur, les forces magnétiques qu'ils exercent soient de même sens et attirent la masse et que dans la seconde position du même commutateur, elles soient opposées l'une à l'autre et s'annulent sensiblement.

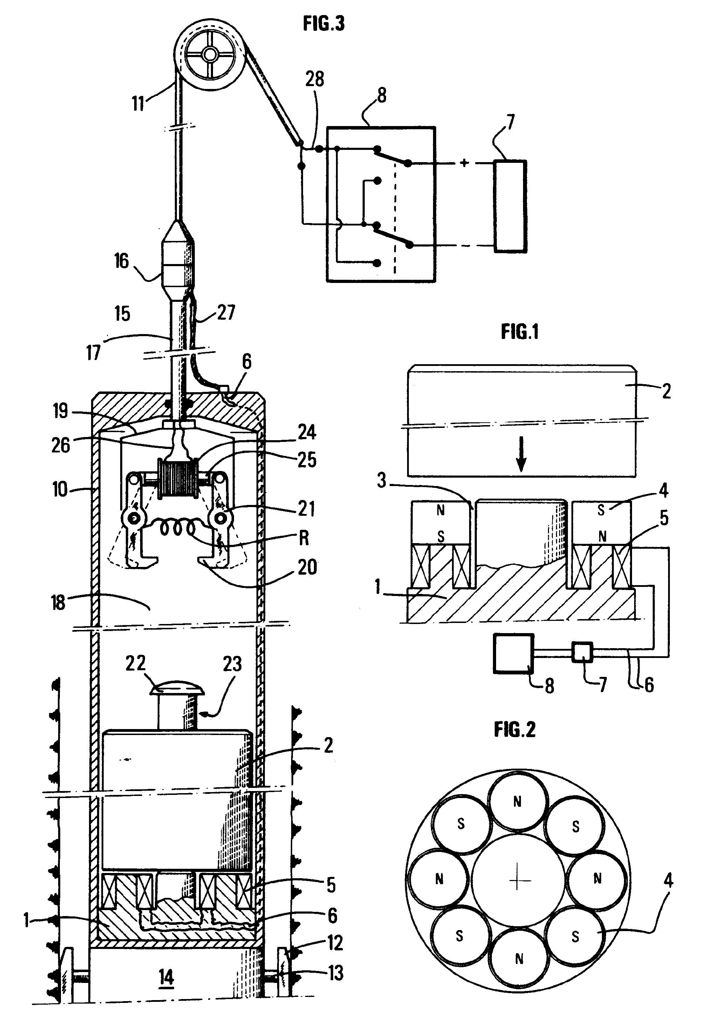

Le nombre et la disposition des ensembles magnétiques sont choisis en fonction de la forme de l'élément-cible et de la masse. Dans le cas où l'élément-cible et la masse ont une forme cylindrique, on peut disposer plusieurs ensembles magnétiques symétriquement par rapport à la direction de déplacement de la masse. De préférence, on associe à la masse un nombre pair d'aimants permanents (figure 2), disposés de manière que les axes d'aimantation de deux aimants adjacents soient inversés l'un par rapport à l'autre. En regard de la masse, on aura une alternance de pôles Nord N et de pôles Sud S. Cette disposition favorise la fermeture des lignes de forces magnétiques entre les aimants permanents.

Un électro-aimant 5 est disposé contre chaque aimant permanent 4 de manière que la direction du champ magnétique créé par la circulation du courant électrique et celle du champ permanent soient parallèles. Les bobinages des différents électro-aimants sont connectés en série par exemple et de manière que la circulation du courant électrique crée dans deux électro-aimants adjacents, des champs magnétiques de sens opposés l'un à l'autre.

Suivant la position du commutateur 8, on crée une circulation de courant électrique telle que les forces magnétiques de l'aimant permanent et de l'électro-aimant de chaque ensemble magnétique s'ajoutent, ou bien se retranchent l'une de l'autre.

Le dispositif fonctionne de la manière suivante. Lorsque la masse se déplace vers l'élément-cible on impose un courant électrique dans un sens tel que les forces magnétiques des aimants permanents 4 et des électro-aimants 5 s'ajoutent. La force d'attraction résultante a pour effet d'attirer la masse, de la plaquer contre l'élément-cible et ainsi d'empêcher tout rebond éventuel.

Après l'impact quand on doit ramener la masse à sa position initiale de départ, on inverse le sens du courant électrique de manière que les forces magnétiques des aimants permanents 4 et des électro-aimants 5 se neutralisent et que la force d'attraction résultante s'annule. La masse peut alors être éloignée de l'élément-cible.

Dans l'exemple d'application de la figure 3, le dispositif anti-rebond est utilisé pour empêcher les rebonds d'une masse 2 contre un élément-cible 1 couplé avec la paroi d'un puits 9. La masse 2 se déplace en ligne droite à l'intérieur d'un corps allongé 10 descendu dans le puits 9 à l'extrémité d'un câble électro-porteur 11 comportant des lignes d'alimentation électrique. Vers son extrémité opposée au câble 11, le corps 10 est associé à des patins d'ancrage 12. Ces patins sont fixés à l'extrémité des tiges 13 de vérins (non représentés) disposés radialement dans un compartiment 14 contenant un système hydraulique de manoeuvre. Un tel système hydraulique est décrit dans le brevet français précité n° 2 558 601.

La masse est déplacée d'une position d'impact en contact avec l'élément-cible à une position d'armement par des moyens de levage. Ces moyens comportent une tige rigide 15 reliée au câble 11 par un connecteur mécanique et électrique 16. La tige 15 traverse la paroi terminale supérieure 17 du corps par une ouverture et à l'intérieur, dans la cavité 18 où se déplace la masse, elle est fixée à des moyens d'accrochage escamotables. Ces moyens comportent un support rigide 19. Deux crochets 20 peuvent pivoter sur des axes 21 fixés au support 19 entre une position de rapprochement et une position d'écartement (représentée en tiretés sur la figure 3). Sur sa face supérieure, la masse comporte une tête 22 pourvue d'une rainure circulaire 23 où les pointes des crochets 20 peuvent venir s'engager en position de rapprochement et rendre ainsi la masse 2 solidaire du support d'accrochage 19. Le pivotement des crochets vers leur position d'écartement est obtenu par excitation d'électro-aimants 24 à noyaux mobiles 25. Ces noyaux sont disposés radialement dans le plan de pivotement des crochets 20 et reliés à ces derniers. Un ressort de rappel R tend à maintenir les crochets 20 dans leur position de rapprochement.

L'excitation des électro-aimants est assurée par des conducteurs 26 passant dans l'axe de la tige rigide 15 et reliés dans le connecteur 16 à des lignes conductrices 28 du câble électro-porteur 11. Les conducteurs électriques 6 pour l'alimentation des électro-aimants 5 du dipositif anti-rebond remontent par un canal ménagé dans la paroi latérale du corps 10 vers la paroi terminale 17 où ils sont raccordés à une première extrémité d'un câble électrique 27 enroulé en hélice autour de la tige rigide 15. A son extrémité opposée, le câble électrique 27 pénètre dans le connecteur 16 où il est raccordé à des lignes électriques 28 du câble électro-porteur 11. Les conducteurs électriques 6 et 26 sont connectés de façon que les électro-aimants du dispositif anti-rebond soient connectés en série avec la bobine de l'électro-aimant 24. D'autres conducteurs électriques (non représentés) permettent la transmission au système hydraulique des courants électriques et de signaux de commande.

A l'extrémité opposée du câble électro-porteur 11, les conducteurs 28 sont connectés à la source de courant électrique 7 (cf. figure 1) par l'intermédiaire du commutateur 8. Les conducteurs 6 et 26 sont interconnectés de manière que dans une première position du commutateur 8, les électro-aimants 24 écartent les crochets 20 l'un de l'autre et en même temps les électro-aimants 6 exercent une force d'attraction sur la masse 2. Dans la seconde position du commutateur 8, ces mêmes électro-aimants repoussent les crochets vers leur position de rapprochement et exercent une force répulsive sur la masse 2.

La source de puits ayant été ancrée dans le puits par écartement des patins d'ancrage 12, le commutateur 8 est placé dans sa seconde position et le câble 11 est relâché de manière que le support rigide 19 descende le long de la cavité 18 vers la masse 2 qui est dans sa position (ou position basse) contre l'élément-cible. Au contact de la tête 22, les crochets 20 s'écartent et viennent s'engager dans la rainure 23 de celle-ci.

Par une traction sur le câble électro-porteur 11, on remonte jusqu'à une position haute le support 19 et la masse 2 qui lui est accrochée.

Au moment choisi pour le déclenchement, on place le commutateur 8 sur sa première position. Les électro-aimants 24 écartent les crochets 20 qui retiennent la masse libérée, celle-ci chute le long de la cavité 18 et en arrivant au contact de l'élément-cible, elle subit la force d'attraction électro-magnétique développée par les électro-aimants 5. Les électro-aimants sont choisis en fonction de l'énergie cinétique acquise par la masse à la fin de sa chute pour empêcher tout rebond éventuel.

On ne sortirait pas du cadre de l'invention en ajoutant à la source du puits de la figure 3, des aimants permanents tels que les aimants 4 représentés à la figure 1 pour augmenter la force d'attraction magnétique subie par la masse 2. Dans le cas le plus général, l'association d'aimants permanents aux moyens électro-magnétiques n'est nullement obligatoire. La force d'attraction magnétique pourra éventuellement être créée par les seuls moyens électro-magnétiques.

On ne sortirait pas non plus du cadre de l'invention en appliquant le dispositif selon l'invention à toute source sismique à percussion quelle qu'elle soit.

**Revendications**

1. Dispositif anti-rebond pour éviter les chocs multiples d'une masse en mouvement (2) après un premier choc contre un autre élément (1), caractérisé en ce qu'il comporte des moyens magnétiques (4, 5) disposés dans des logements dudit élément pour exercer sur la masse en mouvement une force attractive intermittente qui a pour effet de la plaquer contre ledit élément et d'empêcher son recul sous l'effet du choc.

2. Dispositif anti-rebond pour éviter les chocs multiples d'une masse (2) en mouvement après un premier choc contre un élément-cible (1) en contact avec des formations géologiques, caractérisé en ce qu'il comporte des moyens magnétiques (4, 5) disposés dans des logements dudit élément-cible pour exercer sur la masse une force attractive intermittente qui a pour effet de plaquer la masse contre l'élément-cible et empêcher son recul sous l'effet du choc.

3. Dispositif anti-rebond selon la revendication 2, caractérisé en ce que l'élément-cible (1) est solidaire d'un corps allongé (10) associé à des moyens d'ancrage escamotables (12, 13) pour coupler le corps allongé avec les parois d'un puits ou forage (9) et les moyens magnétiques comportent des électro-aimants (5) et des circuits d'alimentation (6, 27, 28) connectés avec des lignes conductrices (28) d'un câble électro-porteur (11) reliant ledit corps à une installation de surface, les lignes conductrices (28) étant connectées à une source de courant électrique (7) par l'intermédiaire d'un commutateur de commande (8).

4. Dispositif anti-rebond selon la revendication 3, caractérisé en ce que les circuits d'alimentation des électro-aimants comportent des conducteurs (26) intérieurs au corps allongé (10), un câble (27) extérieur audit corps et un connecteur électrique (16) pour le raccordement électrique du câble extérieur (27) aux lignes conductrices (28) du câble électro-porteur (11).

5. Dispositif anti-rebond selon la revendication 4, caractérisé en ce que le câble extérieur (27) est enroulé en hélice autour d'une tige rigide (15) reliant le connecteur électrique (16) à un ensemble de support (19) déplaçable à l'intérieur du corps, ledit ensemble de support (19) comportant des moyens d'accrochage (20) de la masse associés à des moyens de commande électro-magnétiques (24, 25) et des conducteurs électriques (26) disposés à l'intérieur de la tige rigide (15) pour connecter les moyens de commande électro-magnétiques aux lignes conductrices (28) dans ledit connecteur électrique (16).

6. Dispositif anti-rebond selon l'une des revendications précédentes, caractérisé en ce que les moyens magnétiques comportent au moins un aimant permanent (4), au moins un électro-aimant (5), des moyens d'alimentation en courant électrique (6, 7) et des moyens de commande (8) pour créer alternativement une force magnétique de même sens que la force d'attraction dudit aimant permanent (4) ou de sens contraire à ladite force d'attraction, de manière à annuler sensiblement la force d'attraction résultante.

## Patentansprüche

1. Anti-Rückstoßanordnung zum Vermeiden von mehrfachem Aufprall einer in Bewegung befindlichen Masse (2) nach einem ersten Aufprall gegen ein anderes Element (1) dadurch gekennzeichnet, daß sie magnetische Mittel (4, 5) umfaßt, die in Lagern dieses Elementes angeordnet sind, um auf die in Bewegung befindliche Masse eine intermittierende anziehende Kraft auszuüben, die zur Folge hat, daß sie gegen dieses Element gepreßt wird und ihr Rücklauf unter dem Einfluß des Aufpralls verhindert wird.

2. Anti-Rückstoßanordnung zum Vermeiden von mehrfachem Aufprall einer in Bewegung befindlichen Masse (2) nach einem ersten Aufprall gegen ein in Kontakt mit geologischen Formationen stehendes Target-Element (1), dadurch gekennzeichnet, daß sie magnetische Mittel (4, 5) umfaßt, die in Lagern dieses Target-Elements angeordnet sind, um auf die Masse eine intermittierende anziehende Kraft auszuüben, deren Wirkung es ist, die Masse gegen das Target-Element zu pressen und ihren Rücklauf unter dem Einfluß des Aufpralls zu verhindern.

3. Anti-Rückstoßanordnung nach Anspruch 2, dadurch gekennzeichnet, daß das Target-Element (1) fest mit einem länglichen Körper (10) verbunden ist, welches versenkbaren Verankerungsmitteln (12, 13) zugeordnet ist, um den länglichen Körper mit den Wandungen eines Bohrlochs (9) zu koppeln, und daß die magnetischen Mittel Elektromagnete (5) und Speisekreise (6, 27, 28) umfassen, welche mit leitenden Leitungen (28) eines elektrischen Trägerkabels (11) verbünden sind, welches diesen Körper mit einer Oberflächeninstallation verknüpft, wobei die leitenden Leitungen (28) durch Steuermittel (8) mit einer Stromquelle (7) verbunden sind.

4. Anti-Rückstoßanordnung nach Anspruch 3, dadurch gekennzeichnet, daß die Speisekreise der Elektromagneten innerhalb des länglichen Körpers (10) angeordnete Leiter (26), ein Kabel (27) außerhalb dieses Körpers und einen elektrischen Verbinder (16) zur elektrischen Verbindung des äußeren Kabels (27) mit den leitenden Leitungen (28) des elektrischen Trägerkabels (11) umfassen.

5. Anti-Rückstoßanordnung nach Anspruch 4, dadurch gekennzeichnet, daß das äußere Kabel (27) spiralförmig um eine steife Stange (15) gewickelt ist, welche den elektrischen Verbinder (16) mit einer innerhalb des Körpers verschiebbaren Trägeranordnung (19) verbindet, wobei die Trägeranordnung (19) Aufhängemittel (20) der Masse, zugeordnet zu elektromagnetischen Steuermitteln (24, 25) und elektrischen Leitern (26) umfaßt, die innerhalb der steifen Stange (15) angeordnet sind, um die elektromagnetischen Steuermittel mit den leitenden Leitungen (28) in diesem elektrischen Leiter (16) verbinden.

6. Anti-Rückstoßanordnung nach einem der folgenden Ansprüche, dadurch gekennzeichnet, daß die magnetischen Mittel wenigstens einen Dauermagneten (4), wenigstens einen Elektromagneten (5), Mittel zum zur Speisung mittels elektrischen Stroms (6, 7) sowie Steuermittel (8) umfassen, um alternativ eine magnetische Kraft gleicher Richtung wie die Anziehungskraft dieses Dauermagneten (4) oder von einer Richtung entgegengesetzt zu dieser Anziehungskraft zu erzeugen, derart, daß die resultierende Anziehungskraft im Wesentlichen annulliert wird.

## Claims

1. Anti-bounce device for preventing the multiple impacts of a moving mass (2) following a first impact against another element (1), characterised in that it comprises a magnetic device (4, 5) positioned in recesses provided in the said element in order to exert, on the moving mass, an intermittent force of attraction, its effect being to apply the mass against the said element and prevent its rebound under the effect of the impact.

2. Anti-bounce device for preventing the multiple impacts of a moving mass (2) following a first impact against a target element (1) in contact with the geological formations, characterised in that it comprises a magnetic device (4, 5) positioned in recesses provided in the said target element in order to exert, on the mass, an intermittent force of attraction, its effect being to apply the mass against the target element and to prevent its rebound under the effect of the impact.

3. Anti-bounce device in accordance with claim 2, characterised in that the target element (1) is integral with an elongated body (10) associated with a retractable means of anchorage (12, 13) used to link the elongated body with the walls of a well or bore hole (9) and the magnetic device comprises electromagnets (5) and the supply circuits (6, 27, 28) connected with the conductive lines (28) of a combined electrical supply and suspension cable (11) connecting the said body to an installation on the surface, the conductive lines (28) being connected to a source of electric current (7) by means of a control switch (8).

4. Anti-bounce device in accordance with claim 3, characterised in that the supply circuits for the electromagnets comprise conductors (26) inside the elongated body (10), a cable (27) external to the said body and an electrical connector (16) used for the electrical connection of the external cable (27) to the conductive lines (28) of the combined electrical supply and suspension cable (11).

5. Anti-bounce device in accordance with claim 4, characterised in that the external cable (27) is wound in the form of a spiral around a rigid rod (15) connecting the electrical connector (16) to a supporting device (19) capable of being displaced within the body, the said supporting device (19) comprising a holding device (20) for the mass, associated with an electro-magnetic means of control (24, 25) and electrical conductors (26) positioned inside the rigid rod (15) in order to connect the electromagnetic means of control to the conductive lines (18) in the said electrical connector (16).

6. Anti-bounce device in accordance with one of the preceding claims, characterised in that the magnetic device comprises at least one permanent magnet (4), at least one electromagnet (5), a means of supplying electrical current (6, 7) and a means of control (8) in order to alternately create a magnetic force in the same direction as the force of attraction of the said permanent magnet (4) or in a direction which is opposite to the said force of attraction, in order to substantially cancel the resultant force of attraction.

**FIG.3**

**FIG.1**

**FIG.2**